## Europäisches Patentamt
## European Patent Office
## Office européen des brevets

(19)

(11) Veröffentlichungsnummer· **0 027 789**
**B1**

(12) **EUROPÄISCHE PATENTSCHRIFT**

(45) Veröffentlichungstag der Patentschrift:
**25.04.84**

(51) Int. Cl.³: **B 65 G 23/44**

(21) Anmeldenummer: **80890115.1**

(22) Anmeldetag: **10.10.80**

(54) **Förderanlage für Streckenvortriebsmaschinen.**

(30) Priorität: **17.10.79 AT 6766/79**

(43) Veröffentlichungstag der Anmeldung:
**29.04.81 Patentblatt 81/17**

(45) Bekanntmachung des Hinweises auf die Patenterteilung:
**25.04.84 Patentblatt 84/17**

(84) Benannte Vertragsstaaten:
**DE FR GB**

(56) Entgegenhaltungen:
**DE - A - 2 841 000**
**DE - B - 1 781 257**
**DE - B - 2 304 560**
**US - A - 4 089 403**

(73) Patentinhaber: **VOEST-ALPINE Aktiengesellschaft,**
**Friedrichstrasse 4, A-1011 Wien (AT)**

(72) Erfinder: **Kissich, Arnulf, Höhenstrasse 9,**
**A-8740 Zeltweg (AT)**
Erfinder: **Arbeithuber, Walter, Hangweg 49,**
**A-8740 Zeltweg (AT)**

(74) Vertreter: **Kretschmer, Adolf, Dipl.-Ing.,**
**Schottengasse 3a, A-1014 Wien (AT)**

Förderanlage für Streckenvortriebsmaschinen

Die Erfindung bezieht sich auf eine Förderanlage von Streckenvortriebsmaschinen mit einer einen Boden und Seitenwände aufweisenden Förderrinne, in welcher Mitnehmer geführt sind, welche durch wenigstens eine, ungefähr mittig in der Förderrinne verlaufende über einen Umlenkstern und einen am hinteren Ende der Förderrinne angeordneten Antriebsstern geführte, endlose Kette verbunden sind und durch diese bewegt werden, wobei der hintere Teil der Förderrinne, das ist derjenige Teil der Förderrinne, welcher von der Ortsbrust abgewendet ist, in horizontaler Richtung um eine vertikale Achse verschwenkbar am vorderen Teil desselben angelenkt ist und wobei ein die Achse des Antriebssterns tragendes Stellglied im schwenkbaren Teil der Förderanlage angeordnet ist, das zur Aufrechterhaltung der Spannung der Kette nach Maßgabe der Veränderung der Weglänge der Kette bei der Verschwenkung in Richtung der Förderrinne verlagerbar ist. Eine solche Förderanlage ist auf der Streckenvortriebsmaschine angeordnet. Das geschrämte Material wird von der Laderampe der Streckenvortriebsmaschine durch auf diese Laderampe angeordnete bewegliche Ladearme zum vorderen Ende der Förderrinne gebracht und durch die Mitnehmer der Kette in der Förderrinne nach hinten zum Abwurfende gefördert. Der oder die Streckenförderer oder zu beladende Fahrzeuge, welcher das geschrämte Material über das Abwurfende der Förderrinne zugeführt werden soll, sind nun meist nicht mittig im Stollen od. dgl. geführt, und aus diesem Grunde soll das hintere Ende in der Horizontalen verschwenkbar sein. Dieser Verschwenkwinkel kann nach beiden Seiten etwa 45° betragen. In der aus der geradlinigen Lage verschwenkten Stellung wird nun der Kettenweg kürzer. Diese Verkürzung kann bei einer Verschwenkung bis zu 45° bis zu 100 mm und mehr betragen. Die Verkürzung ist abhängig von der Förderrinnenbreite, da ja die Kette unter Vermittlung der Mitnehmer an den Seitenwänden der Förderrinne geführt ist. Um eine gleichmäßige Kettenspannung aufrechtzuerhalten, soll daher der Antriebsstern in Richtung der Förderrinne nach Maßgabe der Veränderung der Weglänge der Kette verlagerbar sein. Diese Aufgabe wurde bisher dadurch gelöst, daß der Antriebsstern auf einem in Richtung der Förderrinne verschiebbaren Schlitten angeordnet wurde, welcher durch Federn nach hinten in Förderrichtung, d. h. also im Sinne einer Kettenspannung, gedrückt wird. Diese Federn werden aber durch die Antriebsleistung belastet, da ja der Antriebsstern, welcher an der Kette zieht, durch diese Kette zurückgezogen wird. Die Federn müssen somit sehr stark und daher voluminös bemessen werden, wofür jedoch Grenzen gesetzt sind. Bei einer solchen bekannten Anordnung des Antriebssterns ist daher die Förderleistung begrenzt. Abgesehen davon können aber auch durch Stauung des Materials in der Förderrinne Blockierungen hervorgerufen werden. Dadurch wird, auch wenn die Federn richtig bemessen sind, der Antriebsstern entgegen der Förderrichtung zurückgezogen, und es können dadurch schwere Beschädigungen des Antriebssystems erfolgen. Die Erfindung stellt sich nun zur Aufgabe, diese Nachteile zu beseitigen und den Antriebsstern zwangsläufig in demjenigen Ausmaß, in welchem sich der Kettenweg bei der betreffenden Schwenkstellung verkürzt, in Förderrichtung zu verlagern.

Die Erfindung besteht hierbei im wesentlichen darin, daß die Enden eines Steuergliedes jeweils in Abstand von der Schwenkachse an dem feststehenden Teil der Förderrinne und an dem verschwenkbaren Teil derselben derart angelenkt sind, daß das Steuerglied auf eine Längenänderung zwischen seinen Anlenkpunkten anspricht und den Antrieb des Stellgliedes davon abhängig steuert. Da das Steuerglied in Abstand von der Schwenkachse, um welche der hintere Teil der Förderrinne gegenüber dem feststehenden vorderen Teil derselben horizontal verschwenkbar ist, am dem hinteren Teil der Förderrinne und an dem vorderen Teil derselben angelenkt ist, wird bei der Verschwenkung der Abstand zwischen diesen beiden Anlenkstellen verkürzt. Da die auf diese Weise erfolgende Längenveränderung des Steuergliedes für die Verstellung des Stellgliedes ausgenutzt wird, erfolgt die Verlagerung der Achse des Antriebssterns zwangsläufig, und die Achse des Antriebssterns kann auch bei großen Förderleistungen nicht entgegen der Förderrichtung zurückgedrückt werden. Es ist daher möglich, die Förderleistung zu vergrößern, und es werden schwere Beschädigungen des Fördersystems im Falle einer Blockierung vermieden. Bei einer Überbelastung könnte höchstens die Kette reißen, und dies wäre ein leicht zu behebender Schaden.

Das Stellglied kann in verschiedener Weise ausgebildet sein. Es kann beispielsweise von einem Stellmotor gebildet sein, der vom Steuerglied gesteuert wird. Gemäß einer bevorzugten Ausführungsform der Erfindung sind jedoch Stellglied und Steuerglied als hydraulische Zylinder-Kolben-Aggregate ausgebildet, wobei der sich bei einer Verschwenkung des verschwenkbaren Teiles aus der geradlinigen Lage verkleinernde Arbeitsraum des Kolbens des als Steuerglied dienenden Steuer-Zylinder-Kolben-Aggregates über eine Leitung mit dem Arbeitsraum des Kolbens des als Stellglied dienenden Spann-Zylinder-Kolben-Aggregates, welcher sich bei einer Verlagerung der Achse des Antriebssterns in Förderrichtung vergrößert, verbunden ist. Durch die Veränderung des Abstandes der beiden Anlenkstellen verschiebt sich der Kolben des Steuer-Zylinder-Kolben-Aggregates im Zylinder.

Da der bei der Verschwenkung sich verkleinernde Arbeitsraum dieses Steuer-Zylinder-Kolben-Aggregates mit dem Arbeitsraum des Spann-Zylinder-Kolben-Aggregates, welcher sich bei einer Verlagerung der Achse des Antriebssterns in Förderrichtung vergrößert, hydraulisch verbunden ist, wird durch das bei der Verschwenkung aus dem Steuer-Zylinder-Kolben-Aggregat in das Spann-Zylinder-Kolben-Aggregat übergedrückte hydraulische Medium die Achse des Antriebssterns in Förderrichtung vorgeschoben, so daß die Verkürzung der Weglänge ausgeglichen wird und die richtige Kettenspannung aufrechterhalten wird. Eine solche Ausbildung hat den Vorteil, daß die Kraft für die Verstellung des Verstellgliedes vom Regelglied selbst aufgebracht wird.

Bei einer Anordnung, bei welcher der Antriebsstern in bekannter Weise auf einem Schlitten gelagert ist, greift gemäß der Erfindung das Stellgied an diesem Schlitten an.

Gemäß der Erfindung ist der Querschnitt des Kolbens des Spann-Zylinder-Kolben-Aggregates im Verhältnis zu dem Querschnitt des Kolbens des Steuer-Zylinder-Kolben-Aggregates so gewählt, daß die Kettenspannung bei allen Verschwenklagen der Förderrinnenteile ungefähr gleich ist.

In der Zeichnung ist die Erfindung anhand eines Ausführungsbeispiels schematisch erläutert.

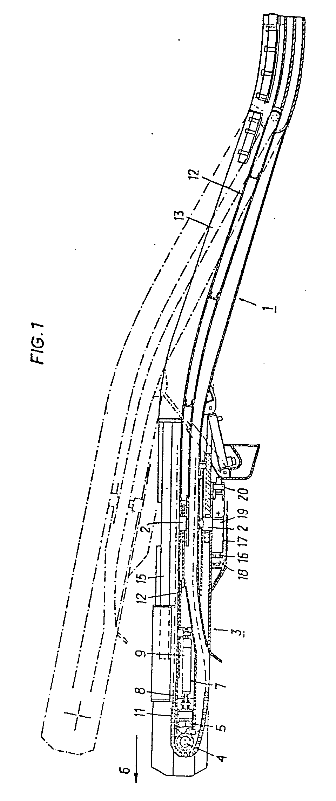

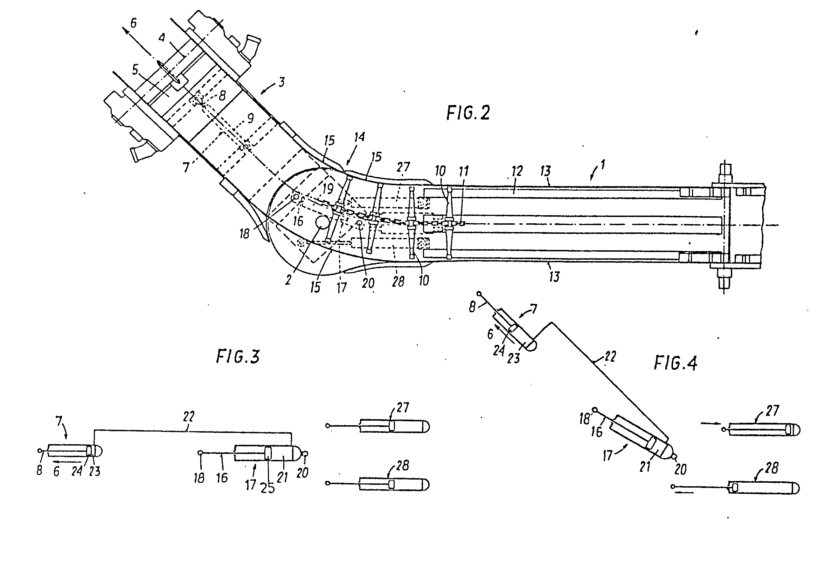

Fig. 1 und 2 zeigen die an der Streckenvortriebsmaschine angeordnete Förderanlage, wobei die Streckenvortriebsmaschine selbst nicht dargestellt ist. Fig. 1 zeigt hierbei einen Seitenriß im Schnitt durch die geradlinig stehende Förderrinne, Fig. 2 zeigt eine Draufsicht, wobei die Förderrinne in einer um 45° abgewinkelten Stellung dargestellt ist. Fig. 3 und 4 zeigen die Stellungen der Zylinder-Kolben-Aggregate in Draufsicht, wobei Fig. 3 die Stellung der Zylinder-Kolben-Aggregate bei geradliniger Stellung der Förderrinne und Fig. 4 bei abgewinkelter Stellung der Förderrinne zeigt.

1 stellt den vorderen, der Ortsbrust zugewandten Teil der Förderrinne mit dem entsprechenden Traggerüst dar. An diesem vorderen Teil ist um vertikale Bolzen 2 mittels hydraulischer Zylinder-Kolben-Aggregate 27 und 28 schwenkbar der hintere Teil 3 der Förderrinne angelenkt. Der hintere Teil 3 der Förderrinne ist, wie Fig. 2 zeigt, bis zu 45° aus der geradlinigen Lage verschwenkbar. Der Antriebsstern, dessen Achse mit 4 bezeichnet ist, ist in einem Schlitten 5 gelagert, welcher am hinteren Teil 3 der Förderrinne in der durch den Pfeil 6 angedeuteten Förderrichtung verschiebbar ist. Dieser Schlitten 5 ist durch ein Zylinder-Kolben-Aggregat 7 entgegen der Förderrichtung 6 gegen den vorderen Teil 3 der Förderrinne abgestützt, wobei die Kolbenstange 8 am Schlitten 5 angreift und der Zylinder 9 am vorderen Teil 3 der Förderrinne befestigt ist. 10 sind Mitnehmer, welche durch die Kette 11 miteinander verbunden sind. Diese Mitnehmer gleiten am Boden 12 der Förderrinne und wirken mit den Seitenwänden 13 derselben zusammen. Die Kette 11 ist somit durch die Mitnehmer 10 mittig in den Förderrinnenteilen 1 und 3 geführt. An der Abwinkelungsstelle 14 sind die Seitenwände durch biegsame Stahlbänder 15 gebildet. Bei der Abwinkelung von der geradlinigen Stellung in die in Fig. 2 dargestellte Stellung verkürzt sich der Kettenweg. In Abstand von der durch die Bolzen 2 gegebenen Schwenkachse ist nun die Kolbenstange 16 des Steuer-Zylinder-Kolben-Aggregates 17 an den hinteren verschwenkbaren Teil 3 der Förderrinne mittels eines Bolzens 18 angelenkt. An den hinteren Teil 1 der Förderrinne ist der Zylinder 19 des Steuer-Zylinder-Kolben-Aggregates 17 mittels eines Bolzens 20 angelenkt. Beide Anlenkstellen 18 und 20 liegen in Abstand von der Schwenkachse 2, und wie Fig. 2 zeigt, verkürzt sich nun der Abstand zwischen den Anlenkstellen 18 und 20 bei der Verschwenkung.

Fig. 3 stellt nun die Anordnung der Zylinder-Kolben-Aggregate 7 und 17 dar. Der Arbeitsraum 21 des Steuer-Zylinder-Kolben-Aggregates 17 ist über eine Leitung 22 mit dem Arbeitsraum 23 des Kolbens 24 des Spann-Zylinder-Kolben-Aggregates 7 hydraulisch verbunden. Bei der Verschwenkung verkleinert sich nun der Arbeitsraum 21 des Steuer-Zylinder-Kolben-Aggregates 17, und das hydraulische Medium, vorzugsweise Fett, wird über die Leitung 22 in den Arbeitsraum 23 des Spann-Zylinder-Kolben-Aggregates 7 gedrückt. Auf diese Weise wird, wie der Vergleich der Fig. 3 mit Fig. 4 zeigt, bei der Verschwenkung der Kolben 24 des Spann-Zylinder-Kolben-Aggregates 7 in Förderrichtung 6 gedrückt und der Schlitten 5 mit dem Antriebsstern in Förderrichtung verschoben. Das Ausmaß der Verschiebung ist durch das Verhältnis der Flächen zwischen den Flächen des Kolbens 25 und des Kolbens 24 bestimmt.

**Patentansprüche**

1. Förderanlage von Streckenvortriebsmaschinen mit einer einen Boden (12) und Seitenwände (13) aufweisenden Förderrinne, in welcher Mitnehmer (10) geführt sind, welche durch wenigstens eine, ungefähr mittig in der Förderrinne verlaufende, über einen Umlenkstern und einen am hinteren Ende der Förderrinne angeordneten Antriebsstern geführte endlose Kette (11) verbunden sind und durch diese bewegt werden, wobei der hintere Teil (3) der Förderrinne in horizontaler Richtung um eine vertikale Achse (2) verschwenkbar am vorderen feststehenden Teil (1) desselben angelenkt ist und wobei ein die Achse (4) des Antriebssterns tragendes Stellglied (7) im schwenkbaren Teil (3) der Förderanlage angeordnet ist, das zur Aufrechterhaltung der Spannung der Kette nach Maßgabe der Veränderung der Weglänge der Kette (11) bei der Verschwenkung in Richtung der Förderrinne verlagerbar ist, dadurch gekennzeichnet, daß die Enden eines Steuergliedes (17) jeweils in Abstand von der Schwenkachse (2) an dem feststehenden Teil (1) der Förderrinne und an dem verschwenkbaren Teil (3) derselben derart angelenkt sind, daß das Steuerglied (17) auf eine Längenänderung zwischen seinen Anlenkpunkten anspricht und den Antrieb des Stellgliedes (7) davon abhängig steuert.

2. Förderanlage nach Anspruch 1, dadurch gekennzeichnet, daß Stellglied (7) und Steuerglied (17) als hydraulische Zylinder-Kolben-Aggregate ausgebildet sind, wobei der sich bei einer Verschwenkung des verschwenkbaren Teils (3) aus der geradlinigen Lage verkleinernde Arbeitsraum (21) des Kolbens (25) des als Steuerglied (17) dienenden Steuer-Zylinder-Kolben-Aggregates über eine Leitung (22) mit dem Arbeitsraum (23) des Kolbens (24) des als Stellglied (7) dienenden Spann-Zylinder-Kolben-Aggregates, welcher sich bei einer Verlagerung der Achse (4) des Antriebssterns in Förderrichtung (6) vergrößert, verbunden ist.

3. Förderanlage nach Anspruch 1 oder 2, dadurch gekennzeichnet, daß der Antriebsstern in an sich bekannter Weise auf einem Schlitten (5) gelagert ist und daß das Spann-Zylinder-Kolben-Aggregat (7) am Schlitten (5) angreift.

4. Förderanlage nach Anspruch 1, 2 oder 3, dadurch gekennzeichnet, daß der Querschnitt des Kolbens (24) des Spann-Zylinder-Kolben-Aggregates (7) im Verhältnis zu dem Querschnitt des Kolbens (25) des Steuer-Zylinder-Kolben-Aggregates (17) so gewählt ist, daß die Kettenspannung bei allen Verschwenklagen der Förderrinnenteile (1, 3) ungefähr gleich ist.

## Claims

1. Conveyor for tunnelling machines, comprising a conveyor trough having a bootom (12) and side walls (13) and having driver elements (10) being guided therein and being interconnected and moved by at least one endless chain (11) arranged approximately centrally in the conveyor trough and guided by a non-driven return spider and a drive spider wheel at the rear end of the conveyor trough, the rear section (3) of the conveyor trough being connected by a vertical pivot pin (2) to the stationary front section (1) thereof for horizontal swinging movement relative thereto, and an actuator (7) carrying the axle (4) of the drive spider wheel being arranged in the pivotable section (3) of the conveyor which is displaceable in the direction of the conveyor trough during swinging movement thereof for retaining the tension of the chain (11) in accordance with any change of chain path length, characterized in that both ends of a control element (17) at a distance from the privot pin (2) each are hinged at the stationary section (1) and at the pivotable section (3), resp., of the conveyor trough such that the control element (17) responds to any change of the distance between its hinge points and in dependence thereon controls the actuator (7).

2. A conveyor as claimed in claim 1, characterized in that the actuator (7) and the control element (17) are formed by hydraulic cylinder-piston-units wherein the compression chamber (21) of the piston (25) of the control-cylinder-piston-unit acting as control element (17), which diminishes when the pivotable section (3) of the trough turns out of its straight position, via a conduit (22) is connected to the compression chamber (23) of the piston (24) of the force-cylinder-piston-unit acting as actuator (7), which is enlarged when the axle (4) of the drive spider wheel moves in the conveying direction (6).

3. A conveyor as claimed in claim 1 or 2, characterized in that the drive spider wheel, as known per se, is mounted on a supporting saddle (5), and that the force-cylinder-piston-unit (7) acts on the said saddle (5).

4. A conveyor as claimed in claim 1, 2 or 3, characterized in that the relationship between the piston area of the piston (24) of the force-cylinder-piston-unit (7) and the piston area of piston (25) of the control-cylinder-piston-unit (17) is selected in such a manner that at any pivotal position of the sections (1, 3) of the trough the tension of the chain remains nearly the same.

## Revendications

1 - Transporteur pour machines de traçage en veine, pourvu d'une gouttière de transport présentant un fond (12) et des parois latérales (13), dans laquelle sont guidés des taquets d'entraînement (10) reliés entre eux et entraînés par au moins une chaîne sans fin (11) placée à peu près au milieu de la gouttière de transport et passant sur une roue dentée de renvoi et une roue dentée motrice placée à l'autre extrémité de la gouttière de transport, la partie arrière (3) de la gouttière de transport étant articulée, de façon à pivoter horizontalement autour d'un axe vertical (2), sur sa partie avant fixe (1), un élément de réglage (7), portant l'arbre (4) de la roue dentée motrice, étant placé dans la partie pivotante (3) du transporteur et pouvant être déplacé selon la direction de la gouttière de transport lors du pivotement, en fonction de la variation de la longueur du parcours de la chaîne (11), pour maintenir la tension de celle-ci, caractérisé en ce que les extrémités d'un élément de commande (17) sont articulées, à une certaine distance de l'axe de pivotement (2), sur la partie fixe (1) de la gouttière de transport et sur sa partie pivotante (3) de telle façon que l'élément de commande (17) réagisse à une variation de longueur entre ses points d'articulation et commande en fonction de cette variation l'entraînement de l'élément de réglage (7).

2 - Transporteur selon la revendication 1, caractérisé en ce que l'élément de réglage (7) et l'élément de commande (17) sont des ensembles hydrauliques à vérin, la chambre de travail (21) du piston (25) de l'ensemble de commande à vérin qui sert d'éléments de commande (17), qui devient plus petite quand l-élément pivotant (3) pivote hors de la position rectiligne, étant reliée par une conduite (22) à la chambre de travail (23) du piston (24) de l'ensemble de serrage à vérin qui sert d'élément de réglage (7), chambre qui devient plus grande quand l'arbre (4) de la roue dentée motrice se déplace dans le sens du transport (6).

3 - Transporteur selon la revendication 1 ou 2, caractérisé en ce que la roue dentée motrice est montée, d'une façon connue en soi, sur un chariot (5), et en ce que l'ensemble (7) de serrage à vérin est connecté au chariot (5).

4 - Transporteur selon la revendication 1, 2 ou 3, caractérisé en se que la section du piston (24) de l'ensemble (7) de serrage à vérin est choisie de telle façon par rapport à la section du piston (25) de l'ensemble (17) de commande à vérin, que la tension de la chaîne soit à peu près la même pour toutes les positions de pivotement des éléments (1, 3) de la gouttière de transport.

FIG.1

FIG.2

FIG.3

FIG.4

0 027 789